# EUROPÄISCHE PATENTSCHRIFT

(11) **EP 1 167 703 B1**
(45) Veröffentlichungstag und Bekanntmachung des Hinweises auf die Patenterteilung: **19.03.2008**
(21) Anmeldenummer: 01114099.3
(22) Anmeldetag: 09.06.2001
(51) Int. Cl.: F01L 9/04, F01L 13/00, F02D 13/02

(54) **Elektronisches Steuergerät zur Steuerung von Aktuatoren einer Brennkraftmaschine in Kraftfahrzeugen mit Mitteln zur Änderung der Ventilsteuerzeiten und/oder mit Mitteln zur Änderung der Ventilhübe**
Electronic apparatus for controlling actuators of an engine with means to vary the valve timing and/or the valve lift
Dispositif électronique pour commander les organes d'un moteur à combustion, avec des moyens de commande du calage et/ou de la course des soupapes

(30) Priorität: 01.07.2000 DE 10032103
(43) Veröffentlichungstag der Anmeldung: 02.01.2002
(73) Patentinhaber: Bayerische Motoren Werke Aktiengesellschaft, 80809 München (DE)
(72) Erfinder: Krämer, Gerd, 82065 Baierbrunn (DE); Scholler, Michael, 85521 Ottobrunn (DE)

(56) Entgegenhaltungen:
- DE-A1- 4 325 902
- US-A- 5 469 818
- US-A- 5 889 205
- US-A- 6 055 948
- JANKOVIC M ET AL: "TORQUE MANAGEMENT OF ENGINES WITH VARIABLE CAM TIMING" IEEE CONTROL SYSTEMS MAGAZINE, IEEE INC. NEW YORK, US, Bd. 18, Nr. 5, 1998, Seiten 34-42, XP001162721 ISSN: 0272-1708

## Beschreibung

Die Erfindung bezieht sich auf ein Verfahren zur Steuerung von Aktuatoren einer Brennkraftmaschine in Kraftfahrzeugen mit Mitteln zur Änderung der Ventilsteuerzeiten und/oder mit Mitteln zur Änderung der Ventilhübe nach dem Oberbegriff des Patentanspruchs 1.

Aus dem US Patent 5,889,205 geht bereits ein mathematisches Modell zur Berechnung der Luftfüllung im Zylinder insbesondere in Abhängigkeit von einem Last- bzw. Drucksensorwert hervor.

Ein Verfahren und eine Vorrichtung zur elektronischen Steuerung von Aktuatoren einer Brennkraftmaschine mit variabler Gaswechselsteuerung, d. h. mit Mitteln zur Änderung der Ventilsteuerzeiten und/oder mit Mitteln zur Änderung der Ventilhübe, ist beispielsweise aus der DE 43 25 902 A1 bekannt. Aktuatoren der Brennkraftmaschine sind z. B. eine Zündspule zur Einstellung des Zündwinkels, Einspritzventile und mindestens ein Stellmotor zur Nockenwellenverdrehung und/oder Nockenwellenumschaltung. Ein Beispiel für eine Nockenwellenverdrehung und/oder für eine Nockenwellenumschaltung zur stufenlosen Änderung der Ventilsteuerzeiten und/oder der Ventilhübe ist auf den Seiten 246 und 247 des Fachbuches "Autoelektrik, Autoelektronik am Ottomotor", Bosch, VDI-Verlag, 1994, beschrieben. Die Änderung der Ventilsteuerzeiten (insbesondere der Öffnungszeiten der Einlaß- und/oder Auslaßventile bezogen auf den Kurbelwellenwinkel) ist auch unter dem Begriff variable Nockenwellenverstellung (VANOS) bekannt. Die Änderung des Ventilhubes wird beispielsweise mittels eines sog. variablen Ventiltriebs (VVT) vorgenommen. In Zukunft sollen Ventilsteuerzeitänderungen und Ventilhubänderungen bei Brennkraftmaschinen vorzugsweise überlagert werden.

Beispielsweise erfolgt derzeit die Steuerung des Zündwinkels bei Brennkraftmaschinen über ein Kennfeld abhängig von einer mehr oder weniger genau ermittelten Zylinderfüllung und der Brennkraftmaschinendrehzahl. Dieses Kennfeld wird hinsichtlich der motorischen Kennwerte Leistung, Verbrauch und Emissionen durch Prüfstandversuche empirisch ermittelt und für den Serieneinsatz abgespeichert. Der Einfluß der Gaswechselsteuerungen auf den Zündwinkel wird dabei nur abhängig von der sog. variablen Einlaßspreizung beschrieben. Der Zündwinkel wird nur für die beiden Spreizungsendwerte (mechanische Anschläge) der Einlaßspreizung in zwei Kennfeldern abgelegt. Zwischen den Werten der beiden Kennfelder wird linear interpoliert. Die Abhängigkeit des Zündwinkels von der Einlaßspreizung ist für Brennkraftmaschinen mit zusätzlichen Variabilitäten im Ventiltrieb (Einlaß- und Auslaßspreizung sowie Einlaß- und Auslaßventilhubänderung) nicht mehr ausreichend. Eine lineare Interpolation zwischen zwei Kennfeldern kann nicht den Verlauf der tatsächlichen Betriebsgrößen, wie z. B. den Verlauf des Zündwinkels, unter Berücksichtigung aller Variabilitäten wiedergeben. Ähnliches gilt auch für andere Aktuatorsteuerungen bei Brennkraftmaschinen, wie z. B. für die Steuerung der Einspritzung.

Es ist Aufgabe der Erfindung, bei derartigen Brennkraftmaschinensystemen eine korrekte Berechnung der Betriebsgrößen und eine korrekte Steuerung der Aktuatoren abhängig von den Ventilhüben und/oder von den Ventilsteuerzeiten zu ermöglichen.

Diese Aufgabe wird durch die Merkmale des Patentanspruchs 1 bzw. 7 vorrichtungs- bzw. verfahrensmäßig gelöst. Vorteilhafte Weiterbildungen der Erfindung sind die Gegenstände der abhängigen Patentansprüche.

Der Erfindung liegt die Erkenntnis zugrunde, daß eine wesentliche Einflußgröße die tatsächliche Zylinderfüllung ist, die bei Gaswechselsteuerungen in hohem Maße variabel ist. Die Zylinderfüllung wiederum wird insbesondere durch den Restgasgehalt im Zylinder sowie durch die Gemischaufbereitung bzw. Gemischzusammensetzung im Zylinder und durch die damit zusammenhängende Strömungsgeschwindigkeit der Gemischmenge beim Einströmen des Gemisches in den Zylinder beeinflußt. Diese Einflußgrößen werden bei der erfindungsgemäßen Korrekturfaktorbestimmung berücksichtigt. Im ff. wird die Strömungsgeschwindigkeit der Gemischmenge kurz Geschwindigkeit genannt.

Einfluß der mittleren Geschwindigkeit der Gemischmenge am Einlaßventil:

Durch diese mittlere Geschwindigkeit wird allein der Einfluß der Ventilhübe berücksichtigt, ohne die Ventilsteuerungszeiten zu berücksichtigen. Die mittlere Geschwindigkeit wird vorzugsweise durch die dem Zylinder zugeführte Gemischmenge pro Arbeitsspiel und pro Strömungsquerschnitt berechnet. Der Strömungsquerschnitt ist insbesondere abhängig vom Einlaßventilhub, aber auch von den geometrischen Daten der Brennkraftmaschine sowie von der Durchströmzahl. Weiterhin können noch Drehzahl und Dichte der Gemischmenge berücksichtigt werden. Bei der Bestimmung dieser mittleren Geschwindigkeit wird von geöffneten Ein- und Auslaßventilen ausgegangen. D. h. es wird davon ausgegangen, daß bei entdrosseltem Ansaugkanal, wie z. B. bei VVT-Brennkraftmaschinen üblich, der Druck im Ansaugkanal, der Druck im Abgaskanal und damit auch der Druck im Zylinder (Zylinderdruck) in etwa gleich sind und im Wesentlichen dem Umgebungsdruck entsprechen. Somit entsteht im Zylinder kein Differenzdruck, der Einfluß auf die Geschwindigkeit der Gemischmenge ausüben könnte.

Einfluß der maximalen Geschwindigkeit der Gemischmenge pro Arbeitsspiel am Einlaßventil:

Durch diese maximale Geschwindigkeit wird insbesondere der Einfluß der variablen Ventilsteuerzeiten bzw. die Einlaß- und/oder Auslaßspreizungen berücksichtigt. Hierbei sind zwei Bedingungen zu unterscheiden:

### 1. Ohne Ventilüberschneidung:

Je später nach dem Oberen Totpunkt des Zylinders bzw. nach dem Schließen des Auslaßventils das Öffnen des Einlaßventils beginnt, desto größer ist der Unterdruck im Zylinder im Vergleich mit dem Druck im Ansaugkanal bedingt durch die Abwärtsbewegung des Kolbens im Zylinder bei geschlossenen Ein- und Auslaßventilen. Kurz nach dem Öffnen des Einlaßventils strömt die Gemischmenge bedingt durch den Unterschied zwischen dem Druck im Ansaugkanal und dem Zylinderdruck zunächst mit einer Spitzengeschwindigkeit ein, die hier als die maximale Geschwindigkeit bezeichnet wird. Der Zylinderdruck kann für den Bereich des Kurbelwellenwinkels, in dem die Ventile geschlossen sind, über die allgemeine Gasgleichung aus der zugehörigen Volumenänderung im Zylinder berechnet werden. Der Druck im Ansaugkanal und der Druck im Abgaskanal müssen hierbei nicht berücksichtigt werden.

### 2. Mit Ventilüberschneidung:

Bei einer Ventilüberschneidung, d. h. während des Bereichs des Kurbelwellenwinkels, über den das Einlaßventil bzw. die Einlaßventile und das Auslaßventil bzw. die Auslaßventile eines Zylinders gemeinsam geöffnet sind, findet ein Durchströmen des Zylinders aufgrund eines Druckausgleichs statt. Der Druckausgleich erfolgt zwischen dem Druck im Abgaskanal, der sich aus dem Umgebungsdruck und dem Abgasgegendruck zusammensetzt, und dem Druck im Ansaugkanal. Der Druck im Ansaugkanal muß sensorbedingt ggf. aus dem Umgebungsdruck und dem Differenzdruck zwischen dem Umgebungdruck und dem Druck im Sammler berechnet werden, wenn kein Sensor zur direkten Messung des Drucks im Ansaugkanal vorgesehen ist.

Durch die Erfindung wird automatisch berücksichtigt, wenn eine Ventilhubänderung, eine Ventilsteuerzeitenänderung oder beides vorgenommen wird.

In der Zeichnung ist ein Ausführungsbeispiel der Erfindung dargestellt. Es zeigt
- Fig. 1: einen Ventilhubverlauf bei einer Gaswechselsteuerung mit Ventilsteuerzeitenänderung und Ventilhubänderung,
- Fig. 2: die schematische Darstellung der mittleren Geschwindigkeit der Gemischmenge am Einlaßventil,
- Fig. 3: die schematische Darstellung der maximalen Geschwindigkeit der Gemischmenge am Einlaßventil,
- Fig. 4: die schematische Darstellung eines Zylinders mit Einlaß- und Auslaßventil,
- Fig. 5: die schematische Darstellung der in einem Steuergerät enthaltenen Mittel zur Durchführung des erfindungsgemäßen Verfahrens

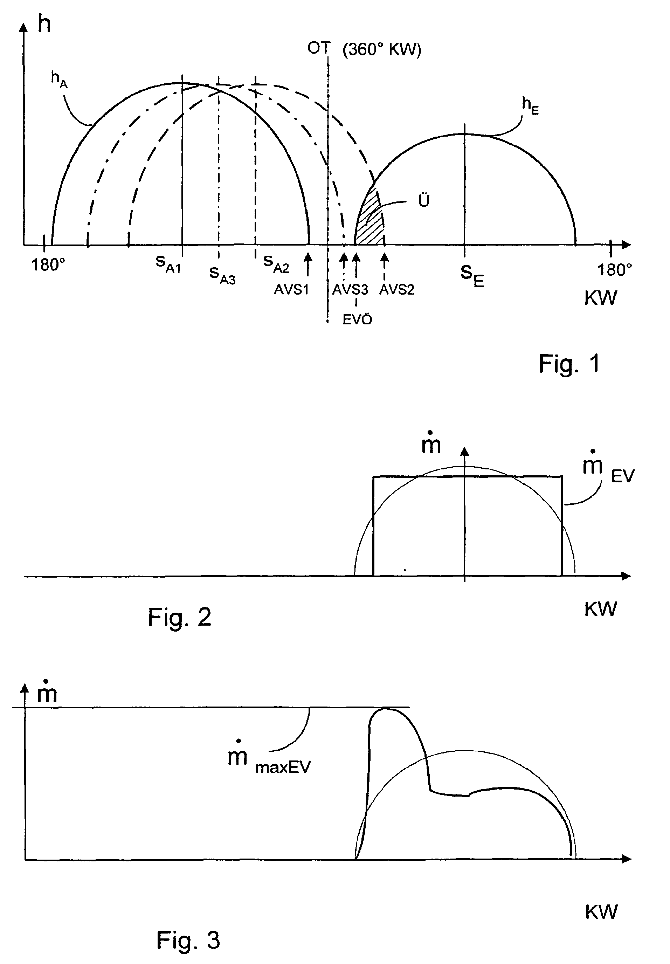

In Figur 1 ist auf der Abszisse der Kurbelwellenwinkel KW und auf der Ordinate der Ventilhub h aufgetragen. Die Figur 1 zeigt drei Beispiele für die Ventilhubverläufe h_{A} des Auslaßventils AV abhängig von der Auslaßventilspreizung ohne Ventilhubänderung und ein Beispiel für einen Ventilhubverlauf h_{E} des Einlaßventils EV eines Zylinders 1 mit Ventilhubänderung, auch Ventilerhebungskurven genannt. Die Ventilüberschneidung Ü ist als Schnittfläche (vgl. Schraffur) der beiden Flächen dargestellt, die jeweils durch die Ventilhubverläufe h_{A} bzw. h_{E} sowie durch die Abszisse eingeschlossen werden. Der obere Totpunkt OT liegt bei einem Kurbelwellenwinkel KW von 360°.

Für die Erfindung ist es unerheblich, ob nur eine Ventilsteuerzeitveränderung oder ob ggf. zusätzlich eine Ventilhubänderung, wie beim Einlaßventil EV in Fig. 1 dargestellt, vorgenommen wird.

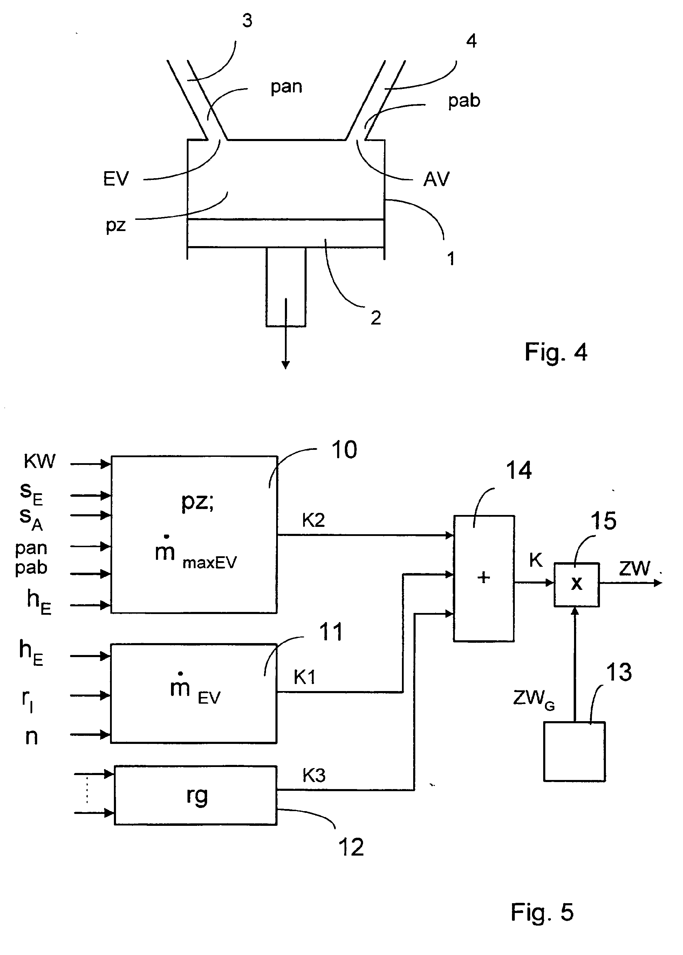

Fig. 2 zeigt die mittlere Geschwindigkeit *ṁ_{EV}* der Gemischmenge r, am Einlaßventil EV in Form einer Rechteckfläche, deren Größe der Fläche unterhalb des Ventilhubverlaufes h_{E} entspricht. Hierbei wird davon ausgegangen, daß im Zylinder 1 kein Differenzdruck vorliegt, der Einfluß auf die Geschwindigkeit der Gemischmenge ausüben könnte, wie oben ausführlich beschrieben wurde. (vgl. auch Fig. 4)

Fig. 3 zeigt die maximale Geschwindigkeit *ṁ*_{max*EV*} der Gemischmenge r₁ am Einlaßventil EV in Form des Maximalwertes eines Geschwindigkeitsverlaufes abhängig vom Unterdruck im Zylinder 1, wie oben ausführlich beschrieben wurde. (vgl. auch Fig. 4)

In Fig. 4 ist ein Zylinder 1 mit einem Kolben 2 dargestellt. Der Brennraum des Zylinders 1 mündet über ein Einlaßventil EV in den Ansaugkanal 3 und über ein Auslaßventil AV in den Abgaskanal 4, wie bei Brennkraftmaschinen üblich. Der Zylinderdruck pz ist der Druck im Brennraum des Zylinders 1 abhängig von der Stellung des Kolbens 2, des Einlaßventils EV und des Auslaßventils AV. Der Druck pan im Ansaugkanal 3 und der Druck pab im Abgaskanal 4 werden vorzugsweise möglichst nahe bei den Ventilen EV und AV gemessen oder bestimmt.

Fig. 5 zeigt ein Ausführungsbeispiel für das erfindungsgemäße Verfahren und die erfindungsgemäße Vorrichtung als Teil eines Steuergerätes.

Der erfindungsgemäße Teil des Steuergerät enthält ff. Funktionsblöcke:
- einen Bestimmungsblock 11 zur Bestimmung eines ersten Korrekturfaktors K1, durch den die mittlere Geschwindigkeit *ṁ_{EV}* berücksichtigt wird,
- einen Berechnungsblock 10 zur Berechnung eines zweiten Korrekturfaktors K2, durch den die maximale Geschwindigkeit *ṁ*_{max*EV*} berücksichtigt wird,
- einen optionalen Ermittlungsblock 12 zur Ermittlung eines dritten Korrekturfaktors K3, durch den der Restgasanteil rg im Zylinder 1 ermittelt wird,
- einen Additionsblock 14 zur Addition aller Korrekturfaktoren K1, K2 und K3 zu einem gemeinsamen Korrekturfaktor K,
- einen Grund-Steuerwert-Bestimmungsblock 13, der im vorliegenden Beispiel einen Grund-Steuerwert ZW_{G} für den Zündwinkel ZW vorgibt und
- eine Multiplizierstelle 15, durch die der Grund-Steuerwert ZW_{G} durch Multiplikation mit dem Korrekturfaktor K korrigiert wird und durch den der korrigierte Zündwinkel ZW zur Ansteuerung des entsprechenden Aktuators ausgegeben wird.

Eingangssignale der Funktionsblöcke 10, 11 und 12 sind ff. Größen:
- n: die Drehzahl der Brennkraftmaschine
- r,: die Gemischmenge bzw. die sog. der Gemischmenge proportionale relative Luftmasse pro Zylinder,
- h_{E}: der Ventilhub des Einlaßventils EV
- pab: der Druck im Abgaskanal 4
- pan: der Druck im Ansaugkanal 3
- s_{E}: die Einlaßventilspreizung
- s_{A}: die Auslaßventilspreizung
- KW: der Kurbelwellenwinkel

Die Einlaßventilspreizung s_{E} bzw. die Auslaßventilspreizung s_{A} wird insbesondere durch den Kurbelwellenwinkel KW am jeweiligen Maximum des Einlaßventilhubverlaufs h_{E} bzw. des Auslaßventilhubverlaufs h_{A} definiert. Die Einlaßventilspreizung s_{E} und die Auslaßventilspreizung s_{A} dienen, beispielsweise bezogen auf den Referenz-Kurbelwellenwinkel beim Oberen Totpunkt OT, als Maß für die Änderungen der Ventilsteuerzeiten.

Der Korrekturfaktor K1 wird basierend auf der mittleren Geschwindigkeit *m_{EV}* der Gemischmenge r, am Einlaßventil EV abhängig vom Einlaßventilhub h_{E}, von der Gemischmenge r, pro Zylinder und von der Drehzahl n der Brennkraftmaschine bestimmt. Der Korrekturfaktor K2 wird basierend auf der maximalen Geschwindigkeit *ṁ*_{max*EV*} der Gemischmenge r, am Einlaßventil EV abhängig vom Zylinderdruck pz berücksichtigt. Der Zylinderdruck pz wird im Falle einer Ventilüberschneidung Ü abhängig vom Druck pan im Ansaugkanal 3 und vom Druck pab im Abgaskanal 4 bestimmt.

Wenn keine Ventilüberschneidung Ü vorliegt, wird der Zylinderdruck pz unabhängig vom Druck pan im Ansaugkanal 3 und vom Druck pab im Abgaskanal 4 bestimmt. Weiterhin wird unterschieden, ob der Kurbelwellenwinkel KW bzw. der Zeitpunkt AVS des Schließens des Auslaßventils AV vor oder nach dem Oberen Totpunkt OT liegt. Wenn der Zeitpunkt AVS des Schließens des Auslaßventils AV nach dem Oberen Totpunkt OT liegt, z. B. im Falle des Zeitpunktes AVS3, wird der Zylinderdruck pz abhängig vom Bereich des Kurbelwellenwinkels KW zwischen dem Zeitpunkt AVS3 des Schließens des Auslaßventils AV und dem Zeitpunkt EVÖ des Öffnens des Einlaßventils EV bestimmt. Wenn der Zeitpunkt AVS des Schließens des Auslaßventils AV vor dem Oberen Totpunkt OT liegt, z. B. im Falle des Zeitpunktes AVS1, wird der Zylinderdruck pz abhängig vom Bereich des Kurbelwellenwinkels KW zwischen dem Oberen Totpunkt OT und dem Zeitpunkt EVÖ des Öffnens des Einlaßventils EV bestimmt,

Durch dieses erfindungsgemäße Ausführungsbeispiel wird eine genaue Berechnung des Zündwinkels unabhängig von variabler Drehzahl, variabler Zylinderfüllung und variablem Differenzdruck über den gesamten Ventilspreizungs- und Ventilhubbereichen bei einem VVT-Motor ermöglicht. Die Applikation kann trotz einer Vielzahl von Einflußfaktoren auf einfache und übersichtliche Weise erfolgen.

## Patentansprüche

1. Verfahren zur Steuerung von Aktuatoren einer Brennkraftmaschine in Kraftfahrzeugen mit Mitteln zur Änderung der Ventilsteuerzeiten und/oder mit Mitteln zur Änderung der Ventilhübe sowie mit Mitteln zur Bestimmung eines einem Aktuator zugeordneten Grund-Steuerwertes, **dadurch gekennzeichnet, dass** ein Korrekturfaktor (K1; K2; K) bestimmt wird, durch den ein Grund-Steuerwert (ZW) korrigiert wird, wobei der Korrekturfaktor die Geschwindigkeit (*ṁ*; *ṁ_{EV}; ṁ_{max EV})* der Gemischmenge (r₁) beim Einströmen über das Einlaßventil (EV) berücksichtigt, wobei der Korrekturfaktor (K; K1) die mittlere Geschwindigkeit (*ṁ_{EV}*) der Gemischmenge (r₁) am Einlaßventil (EV) abhängig vom Einlassventilhub (h_{E}) und unabhängig vom Zylinderdruck (pz) und/oder der Korrekturfaktor (K; K2) die maximale Geschwindigkeit (*ṁ*_{max *EV*}) der Gemischmenge (r₁) am Einlaßventil (EV) abhängig vom Zylinderdruck (pz) berücksichtigt.

2. Verfahren nach nach einem der vorangegangenen Patentansprüche, **dadurch gekennzeichnet, daß** der Zylinderdruck (pz) abhängig vom Bereich des Kurbelwellenwinkels (KW) zwischen dem Zeitpunkt (AVS3) des Schließens des Auslaßventils (AV) und dem Zeitpunkt (EVÖ) des Öffnens des Einlaßventils (EV) und unabhängig vom Druck (pan) im Ansaugkanal (3) und vom Druck (pab) im Abgaskanal (4) bestimmt wird, wenn der Zeitpunkt (AVS3) des Schließens des Auslaßventils (AV) nach dem Oberen Totpunkt (OT) liegt und wenn keine Ventilüberschneidung (Ü) vorliegt.

3. Verfahren nach nach einem der vorangegangenen Patentansprüche, **dadurch gekennzeichnet, daß** der Zylinderdruck (pz) abhängig vom Bereich des Kurbelwellenwinkels (KW) zwischen dem Oberen Totpunkt (OT) und dem Zeitpunkt (EVÖ) des Öffnens des Einlaßventils (EV) und unabhängig vom Druck (pan) im Ansaugkanal (3) und vom Druck (pab) im Abgaskanal (4) bestimmt wird, wenn der Zeitpunkt (AVS1) des Schließens des Auslaßventils (AV) vor dem Oberen Totpunkt (OT) liegt und wenn keine Ventilüberschneidung (Ü) vorliegt.

4. Steuergerät zur Durchführung des Verfahrens zur Steuerung von Aktuatoren einer Brennkraftmaschine in Kraftfahrzeugen nach einem der Patentansprüche 1 bis 3 mit Mitteln zur Änderung der Ventilsteuerzeiten und/oder mit Mitteln zur Änderung der Ventilhübe.

## Claims

1. A method for controlling actuators of an internal combustion engine in motor vehicles with means for varying the valve timing and/or means for varying the valve lifts as well as with means for determining a basic control value associated with an actuator, **characterised in that** a correction factor (K1; K2; K) is determined which corrects a basic control value (ZW), the correction factor taking into account the velocity (*ṁ*; *ṁ_{EV}; ṁ_{max EV})* of the amount of mixture (r₁) on flowing over the intake valve (EV), the correction factor (K; K1) taking into account the mean velocity (*ṁ_{EV})* of the amount of mixture (r₁) at the intake valve (EV) as a function of the intake valve lift (hE) and independently of the cylinder pressure (pz) and/or the correction factor (K; K2) taking into account the maximum velocity (*ṁ*_{max*EV*}) of the amount of mixture (r₁) at the intake valve (V) as a function of the cylinder pressure (pz).

2. A method according to any one of the preceding claims, **characterised in that** the cylinder pressure (pz) is determined as a function of the region of the crankshaft angle (KW) between the time (AVS3) of the closure of the exhaust valve (AV) and the time (EVÖ) of the opening of the intake valve (EV) and independently of the pressure (pan) in the intake channel (3) and of the pressure (pab) in the exhaust gas channel (4) if the time (AVS3) of the closure of the exhaust valve (AV) is after the top dead centre (OT) and if there is no valve overlap (Ü).

3. A method according to any one of the preceding claims, **characterised in that** the cylinder pressure (pz) is determined as a function of the region of the crankshaft angle (KW) between the upper dead centre (OT) and the time (EVÖ) of the opening of the intake valve (EV) and independently of the pressure (pan) in the intake channel (3) and of the pressure (pab) in the exhaust gas channel (4) if the time (AVS1) of the closure of the exhaust valve (AV) is before the top dead centre (OT) and if there is no valve overlap (Ü).

4. A control device for carrying out the method for controlling actuators of an internal combustion engine in motor vehicles according to any one of claims 1 to 3 with means for varying the valve timing and/or with means for varying the valve lifts.

## Revendications

1. Procédé pour commander des actionneurs d'un moteur à combustion interne d'un véhicule automobile, qui comporte des moyens pour faire varier les temps de commande de soupape et/ou les courses de soupape ainsi que des moyens pour déterminer une valeur de commande de base affectée à un actionneur,
**caractérisé en ce qu'**
on détermine un facteur correctif (K1, K2, K3) qui corrige une valeur de commande de base (ZW), ce facteur prenant en compte la vitesse (ṁ_{EV}, ṁ_{max EV}) du débit de mélange (r1) passant sur la soupape d'admission (EV), la vitesse moyenne (ṁ_{EV}) du débit de mélange (r₁) passant sur la soupape d'admission (EV) en fonction de la course (h_{E}) de cette soupape et indépendamment de la pression du cylindre (pz) et/ou du facteur correctif (K ; K2), et la vitesse maximale (ṁ_{max EV}) du débit de mélange (r₁) passant sur la soupape d'admission (EV) en fonction de la pression du cylindre (pz).

2. Procédé selon la revendication 1,
**caractérisé en ce que**
la pression du cylindre (pz) est définie en fonction de la zone de l'angle du vilebrequin (KW) située entre l'instant (AVS3) de la fermeture de la soupape d'échappement (AV) et l'instant (EVÖ) de l'ouverture de la soupape d'admission (EV), et indépendamment de la pression (pan) dans le canal d'admission (3) et de la pression (pab) dans le canal d'échappement (4) quand l'instant (AVS3) de la fermeture de la soupape d'échappement (AV) se trouve après le point mort haut (OT) et qu'il n'y a pas de superposition de soupapes (Ü).

3. Procédé selon la revendication 1,
**caractérisé en ce que**
la pression du cylindre (pz) est définie en fonction de la zone de l'angle du vilebrequin (KW) située entre l'instant (AVS3) de la fermeture de la soupape d'échappement (AV) et l'instant (EVÖ) de l'ouverture de la soupape d'admission (EV), et indépendamment de la pression (pan) dans le canal d'admission (3) et de la pression (pab) dans le canal d'échappement (4) quand l'instant (AVS1) de la fermeture de la soupape d'échappement (AV) se trouve avant le point mort haut (OT) et qu'il n'y a pas de superposition de soupapes (Ü).

4. Appareil de commande pour la mise en oeuvre du procédé de commande d'actionneurs d'un moteur à combustion interne d'un véhicule automobile selon une des revendications 1 à 3,
**caractérisé en ce qu'**
il comporte des moyens pour faire varier les temps de commande de soupape et/ou les courses de soupape.
